# FASCICULE DE BREVET EUROPEEN

(11) **EP 2 711 576 B1**
(45) Date de publication et mention de la délivrance du brevet: **29.11.2017**
(21) Numéro de dépôt: 13183181.0
(22) Date de dépôt: 05.09.2013
(51) Int. Cl.: F16D 3/12, F16D 3/66, F16F 15/123, F16F 15/14

(54) **Dispositif de transmission de couple pour un véhicule automobile**
Momentübertragungsvorrichtung für ein Fahrzeug
Torque transmission device for a vehicule

(30) Priorité: 24.09.2012 FR 1258945
(43) Date de publication de la demande: 26.03.2014
(73) Titulaire: Valeo Embrayages, 80009 Amiens Cedex 2 (FR)
(72) Inventeur: Mahe, Hervé, 80000 AMIENS (FR)
(74) Mandataire: Cardon, Nicolas

(56) Documents cités:
- EP-A2- 0 308 178
- EP-A2- 0 321 121
- WO-A1-91/02175
- US-A- 3 266 271
- US-A1- 2011 031 083
- US-A1- 2012 168 270

## Description

La présente invention concerne un dispositif de transmission de couple pour un véhicule automobile, tel par exemple qu'un convertisseur de couple ou qu'un double volant amortisseur (DVA).

Un tel dispositif comporte de façon générale un élément d'entrée de couple, un élément de sortie de couple, et des organes élastiques montés entre les éléments d'entrée et de sortie de couple et agissant à l'encontre de la rotation de l'un desdits éléments par rapport à l'autre.

Lorsque le dispositif de transmission de couple est de type LTD (Long Travel Damper), il comprend plusieurs groupes d'organes élastiques, dans lesquels les organes élastiques d'un même groupe sont agencés en série par l'intermédiaire d'un organe de phasage de façon à ce que les organes élastiques de chaque groupe se déforment en phase les uns avec les autres.

Le document US 2010/0269497 décrit un convertisseur de couple hydraulique destiné à coupler un arbre de sortie d'un moteur à combustion interne, tel qu'un vilebrequin, à un arbre d'entrée d'une boîte de vitesses.

Le convertisseur de couple comporte classiquement une roue à aubes d'impulseur, apte à entraîner hydrocinétiquement une roue à aubes de turbine, par l'intermédiaire d'un réacteur.

La roue d'impulseur est couplée en rotation au vilebrequin et la roue de turbine est couplée en rotation à deux rondelles de guidage. Ces dernières sont montées de façon mobile autour d'un moyeu central couplé extérieurement en rotation à un voile annulaire et destiné à être couplé intérieurement à l'arbre d'entrée de la boîte de vitesses.

Un embrayage permet de transmettre un couple du vilebrequin aux rondelles de guidage, sans faire intervenir la roue d'impulseur et la roue de turbine. Cet embrayage comporte un élément d'entrée couplé au vilebrequin et un élément de sortie, prenant la forme d'un moyeu cannelé, fixé aux rondelles de guidage.

Des organes élastiques sont montés circonférentiellement entre le voile annulaire et les rondelles de guidage. Ces organes élastiques sont groupés par paires, les organes élastiques d'une même paire étant agencés en série par l'intermédiaire d'un organe de phasage commun, de façon à ce que les organes élastiques se déforment en phase les uns par rapport aux autres. Les organes élastiques présentent sensiblement la même constante de raideur.

Des moyens d'amortissement pendulaire sont montés sur l'organe de phasage et comportent des masses pendulaires fixées de façon mobile sur la périphérie radialement externe de l'organe de phasage.

Les moyens d'amortissement pendulaire et les organes élastiques permettent d'absorber et d'amortir les vibrations et les acyclismes de rotation, dues notamment aux explosions du moteur à combustion interne.

De tels moyens d'amortissement pendulaire peuvent être utilisés sur d'autres dispositifs de transmission de couple, tels notamment que les doubles volants amortisseurs.

On rappelle qu'un double volant amortisseur comporte classiquement un volant d'inertie primaire, destiné à être couplé à un vilebrequin, et un volant d'inertie secondaire, destiné à être couplé à un arbre d'entrée d'une boîte de vitesses par l'intermédiaire d'un embrayage.

Les deux volants sont mobiles en rotation l'un par rapport à l'autre et sont couplés par l'intermédiaire notamment d'organes élastiques. Les constantes de raideur des organes élastiques sont sensiblement identiques les unes par rapport aux autres.

Des masses pendulaires peuvent être montées sur un support formé par un élément mobile du double volant amortisseur, tel par exemple qu'une rondelle de guidage, un voile annulaire ou un organe de phasage.

Les masses sont alors montées sur le support, en général par l'intermédiaire de rouleaux de guidage engagés dans des trous oblongs en arc de cercle des masses et du support. Les concavités des trous des masses sont opposées aux concavités des trous du support. Le mouvement des masses obtenu est du type pendulaire et est fonction de la forme des trous oblongs.

En fonctionnement, lors de la rotation du support mobile sur lequel sont montées les masses, ces dernières se déplacent entre deux positions extrêmes.

Dans ces dispositifs de transmission de couple, on a constaté que les organes de phasage ont en général une fréquence de résonance ou fréquence propre relativement basse, de sorte qu'ils génèrent des vibrations pour des régimes moteurs compris par exemple entre 1000 et 1500 tours par minute, ces vibrations pouvant provoquer du bruit ou avoir un impact négatif sur le confort des utilisateurs du véhicule.

L'invention a notamment pour but d'apporter une solution simple, efficace et économique à ce problème.

A cet effet, elle propose un dispositif de transmission de couple pour un véhicule automobile, comportant un élément d'entrée de couple, un élément de sortie de couple, et au moins deux organes élastiques montés entre les éléments d'entrée et de sortie de couple et agissant à l'encontre de la rotation de l'un desdits éléments d'entrée et de sortie par rapport à l'autre, les organes élastiques étant agencés en série par l'intermédiaire d'un organe de phasage de façon à ce que les organes élastiques se déforment en phase les uns avec les autres, caractérisé en ce que la raideur K1 de l'organe élastique monté entre l'élément d'entrée de couple et l'organe de phasage est inférieure à la raideur K2 de l'organe élastique monté entre l'organe de phasage et l'élément de sortie de couple, le rapport K2/K1 étant au moins égal à 2.

La fréquence de résonance est d'autant plus élevée que le rapport K2/K1 est élevé. Le fait d'avoir un rapport K2/K1 au moins égal à 2 permet ainsi de relever suffisamment la fréquence propre de l'organe de phasage, afin d'éviter que ce dernier soit excité pour des bas régimes du moteur. La fréquence propre de l'organe de phasage peut, par exemple, n'être atteinte que pour des régimes moteurs supérieurs à 3000 ou 4000 tours par minute.

D'une manière générale, le fait d'avoir une raideur K1 relativement faible permet également au dispositif de transmission de couple d'améliorer le filtrage des vibrations et des acyclismes de rotation. La raideur K1 se trouvant au plus près de la source des vibrations, elle permet de filtrer ces vibrations de façon plus efficace.

De préférence, le rapport K2/K1 est compris entre 2 et 5, préférentiellement compris entre 2 et 3.

La valeur minimale de K1 (et donc la valeur maximale du rapport K2/K1) est limitée par plusieurs facteurs. Un premier facteur est l'encombrement disponible pour loger les organes élastiques. En effet, un organe élastique se présentant sous la forme d'un ressort hélicoïdal, par exemple, aura une raideur d'autant plus faible que son nombre de spires et que sa longueur sont importants.

Un autre facteur est que les organes élastiques de raideur K1 doivent avoir une raideur suffisamment importante pour pouvoir transférer le couple moteur de l'élément d'entrée de couple jusqu'à l'élément de sortie de couple.

La valeur du rapport K2/K1 est donc le résultat d'un compromis visant à la fois à conférer à l'organe de phasage une fréquence propre suffisamment élevée et à supporter les contraintes de passage de couple et d'encombrement précitées.

Selon une caractéristique de l'invention, le dispositif comporte des moyens d'amortissement pendulaires comprenant au moins une masse pendulaire montée de façon mobile sur l'organe de phasage, sur l'élément d'entrée de couple ou sur l'élément de sortie de couple.

Comme indiqué précédemment, l'invention permet de minimiser l'amplitude des oscillations de l'organe de phasage et donc le débattement nécessaire des masses pendulaires sur l'organe de phasage, sur l'élément d'entrée de couple ou sur l'élément de sortie de couple. Ceci présente l'avantage d'améliorer le filtrage des vibrations et des acyclismes de rotation. Un rapport K2/K1 supérieur à 2 réduit les vibrations arrivant sur l'organe de phasage, de façon à moins solliciter les masses pendulaires. La moindre sollicitation des masses pendulaires permet alors d'optimiser leur comportement (course, masse...).

Avantageusement, les organes élastiques sont des ressorts de compression hélicoïdaux, l'élément d'entrée de couple, l'élément de sortie de couple et/ou l'organe de phasage comportant des moyens de butée conçus pour limiter la compression des ressorts et éviter que les spires des ressorts soient jointives lors leur compression.

Selon une forme de réalisation de l'invention, le dispositif de transmission de couple se présente sous la forme d'un convertisseur de couple.

Selon une autre forme de réalisation de l'invention, le dispositif de transmission de couple se présente sous la forme d'un double volant amortisseur.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique d'un dispositif de transmission de couple selon l'invention, se présentant sous la forme d'un convertisseur de couple hydrodynamique,
- la figure 2 est une vue en perspective et en coupe longitudinale d'une partie du dispositif de la figure 1,
- la figure 3 est une vue de face d'une partie du dispositif des figures 1 et 2,
- la figure 4 est une vue en perspective, d'une partie du dispositif des figures 1 à 3,
- la figure 5 est une vue éclatée, en perspective, d'un dispositif de transmission de couple se présentant sous la forme d'un double volant amortisseur, conformément à l'art antérieur,
- la figure 6 est une vue de face du dispositif de la figure 5,
- les figures 7, 8, 9 et 10 sont des vues en coupe du dispositif des figures 5 et 6, respectivement selon les lignes A, B, C et D de la figure 6,
- la figure 11 est une vue correspondant à la figure 6, illustrant une forme de réalisation de l'invention,
- la figure 12 est une vue correspondant à la figure 11, dans laquelle l'une des rondelles de guidage à été retirée,
- les figures 13 et 14 sont des vues correspondant respectivement aux figures 11 et 12 et illustrant une autre forme de réalisation de l'invention.

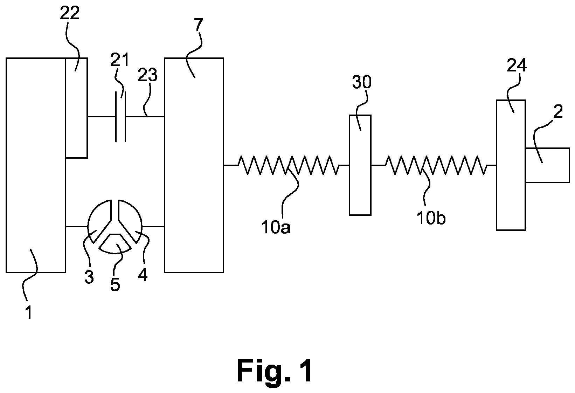

Un convertisseur de couple hydrodynamique selon l'invention est représenté schématiquement et de façon partielle à la figure 1. Ce convertisseur permet de transmettre un couple d'un arbre de sortie d'un moteur à combustion interne d'un véhicule automobile, tel par exemple qu'un vilebrequin 1, à un arbre d'entrée 2 d'une boîte de vitesses.

Le convertisseur de couple comporte classiquement une roue à aubes d'impulseur 3, apte à entraîner hydrocinétiquement une roue à aubes de turbine 4, par l'intermédiaire d'un réacteur 5.

La roue d'impulseur 3 est couplée au vilebrequin 1 et la roue de turbine 4 est couplée à un moyeu de turbine 6, lui-même couplé à deux rondelles de guidage 7, dites respectivement ci-après rondelle de guidage arrière 7a et rondelle de guidage avant 7b.

La rondelle de guidage avant 7b et le moyeu de turbine 6 sont montés rotatifs autour d'un moyeu central cannelé 8, destiné à être couplé à l'arbre d'entrée 2 de la boîte de vitesses.

La rondelle de guidage avant 7b est montée autour du moyeu de turbine 6 et fixée à celui-ci. Les deux rondelles de guidage 7a, 7b s'étendent radialement et délimitent entre elles un espace interne 9 logeant des organes élastiques 10a, 10b, qui sont par exemple des ressorts hélicoïdaux de compression.

La rondelle de guidage arrière 7b comporte un rebord cylindrique 11 à sa périphérie radialement externe, s'étendant en direction de la rondelle de guidage avant 7a et fixé à celle-ci.

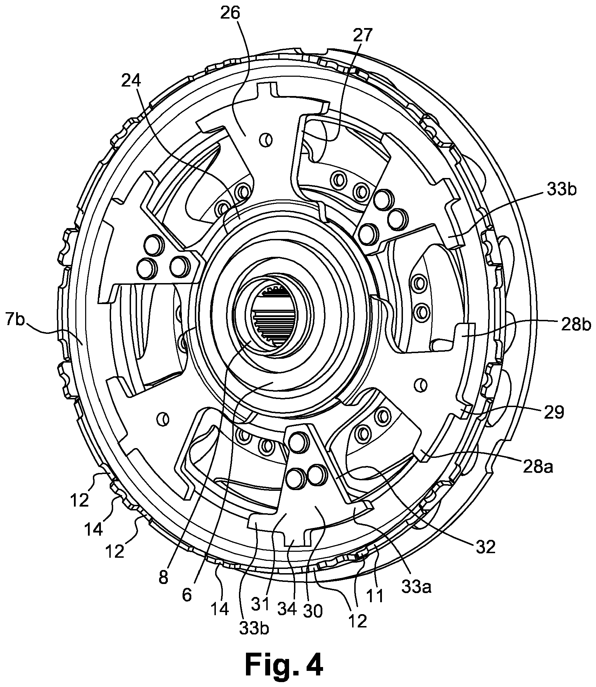

L'extrémité libre du rebord cylindrique 11 comporte des encoches 12 (figure 4) servant au logement de pions 13 de positionnement et de centrage s'étendant depuis la périphérie radialement externe de la rondelle de guidage avant 7a.

L'extrémité libre du rebord cylindrique 11 comporte en outre des languettes 14 s'étendant axialement, avant fixation des deux rondelles de guidage 7a, 7b entre elles. Ces languettes 14 sont rabattues sur la périphérie externe de la rondelle de guidage avant 7a, lors d'une opération de rivetage, et peuvent être soudées à cette dernière, de manière à assurer la fixation des deux rondelles de guidage 7a, 7b. On notera que, dans la forme de réalisation représentée aux figures, chaque languette 14 est positionnée circonférentiellement entre deux pions 13.

Les rondelles de guidage 7a, 7b comportent classiquement des fenêtres 15 servant à loger les organes élastiques 10a, 10b.

L'une au moins des rondelles de guidage 7a, 7b, ici la rondelle de guidage avant 7a, comporte des éléments en saillie 16, 17, par exemple au nombre de six, se présentant sous la forme de portions déformées par emboutissage, en direction de la rondelle de arrière 7b. Chaque élément en saillie 16, 17 comporte deux faces de butée opposées, référencées respectivement 16a, 16b et 17a, 17b.

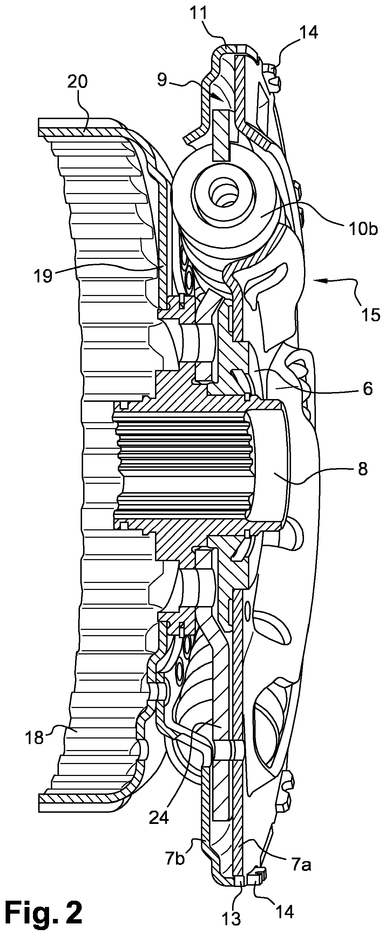

Un moyeu cannelé 18 (figure 2) est également fixé sur la face arrière de la rondelle de guidage arrière 7b. Ce moyeu cannelé 18 comporte une partie radiale 19 fixée sur ladite face arrière de la rondelle de guidage arrière 7b, et un rebord cylindrique cannelé 20 s'étendant vers l'arrière depuis la périphérie radialement externe de la partie radiale 19.

Un embrayage 21 (figure 1) permet de transmettre un couple du vilebrequin 1 aux rondelles de guidage 7, dans une phase de fonctionnement déterminée, sans faire intervenir la roue d'impulseur 3 et la roue de turbine 4. Cet embrayage 21 comporte un élément d'entrée 22 couplé au vilebrequin 1 et un élément de sortie 23, comprenant le moyeu cannelé 18.

Un voile annulaire 24 s'étendant radialement est monté dans l'espace interne et est fixé sur le moyeu central 8, par l'intermédiaire de rivets.

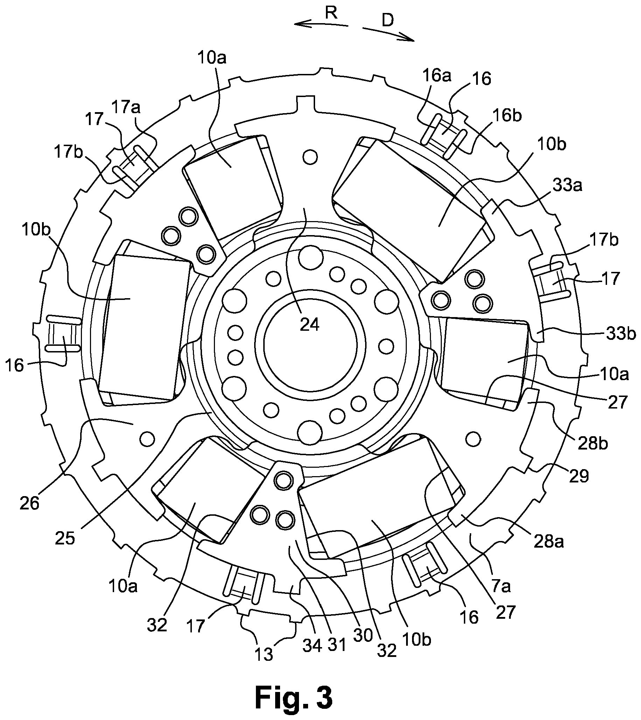

Le voile annulaire 24 comporte une partie annulaire 25 radialement interne à partir de laquelle des pattes 26, par exemple au nombre de trois, s'étendent radialement vers l'extérieur (figures 3 et 4). Chaque patte 26 comporte deux faces opposées 27 servant à l'appui des organes élastiques 10a, 10b, inclinées l'une par rapport à l'autre et par rapport à la direction radiale. Deux plots de butée 28a, 28b s'étendent circonférentiellement de part et d'autre de chaque patte 26, au niveau de sa périphérie externe. Chaque patte 26 comporte en outre, à sa périphérie externe, un plot de butée 29 s'étendant radialement vers l'extérieur.

Les organes élastiques 10a, 10b sont montés circonférentiellement entre le voile annulaire 24 et les rondelles de guidage 7a, 7b.

Plus particulièrement, les organes élastiques 10a, 10b sont agencés par paires. Les organes élastiques d'une même paire sont mis en série par l'intermédiaire d'un organe de phasage commun 30, de façon à ce que les organes élastiques 10a, 10b se déforment en phase les uns avec les autres. Dans la forme de réalisation représentée aux figures, le convertisseur de couple comporte trois paires d'organes élastiques 10a, 10b.

Ainsi, pour chaque paire d'organes élastiques 10a, 10b, en fonction du sens de rotation des rondelles de guidage 7a, 7b par rapport au voile annulaire 24, l'un des organes élastiques (par exemple 10a) est destiné à prendre appui, d'une part, sur l'extrémité correspondante des fenêtres 15 des rondelles de guidage 7a, 7b et, d'autre part, sur l'organe de phasage 30. L'autre organe élastique (par exemple 10b) est alors destiné à prendre appui, d'une part, sur l'organe de phasage 30 et, d'autre part, sur l'une des faces 27 de la patte correspondante 26 du voile annulaire 24.

L'organe de phasage 30 n'est visible que partiellement et comporte une partie annulaire (non visible) sur laquelle des organes d'appui 31, ici au nombre de trois, sont fixés par l'intermédiaire de rivets. Chaque organe d'appui 31 comporte deux faces opposées 32 servant à l'appui des organes élastiques 10a, 10b, et qui sont inclinées l'une par rapport à l'autre et par rapport à la direction radiale. Deux plots de butée 33a, 33b s'étendent circonférentiellement de part et d'autre de chaque organe d'appui, au niveau de sa périphérie externe. Chaque organe d'appui 31 comporte en outre, à sa périphérie externe, un plot de butée 34 s'étendant radialement vers l'extérieur.

Les plots de butée 28a, 28b des pattes 26 du voile annulaire 24 sont aptes à venir en appui respectivement sur les plots de butée 33a, 33b des organes d'appui 31 de l'organe de phasage 30.

Le voile annulaire 24 et l'organe de phasage 30 comportent ainsi chacun trois plots 28a, 28b, 29 et 33a, 33b, 34 et la rondelle de guidage avant 7a comporte six éléments 16, 17 en saillie destinés à coopérer en fonctionnement avec les plots 29, 34 du voile annulaire 24 et de l'organe de phasage 30.

Dans une forme de réalisation non représentée, l'organe de phasage 30 peut en outre comporter des masses pendulaires, destinées à améliorer la filtration des vibrations et des acyclismes de rotation.

Les éléments en saillie 16 peuvent être répartis sur la circonférence de l'une des deux rondelles de guidage, les éléments en saillie 17 étant alors répartis sur l'autre des rondelles de guidage.

Dans le mode de réalisation préféré, les éléments en saillie 16, 17 sont répartis sur la circonférence d'une des deux rondelles de guidage (ou rondelle de guidage avant) en deux groupes, les plots 29 du voile annulaire 24 étant aptes à venir en appui contre des premières faces 16a des éléments en saillie 16 d'un premier groupe, dans un premier sens de rotation (dit sens direct - représenté par la flèche D à la figure 3), et contre des premières faces 17a des éléments en saillie 17 d'un second groupe, dans un second sens de rotation opposé (dit sens rétro - représenté par la flèche R). De même, les plots 34 de l'organe de phasage 30 sont aptes à venir en appui contre des secondes faces 16b des éléments en saillie 17 du second groupe, dans un premier sens de rotation (sens direct), et contre des secondes faces 16b des éléments en saillie 16 du premier groupe, dans un second sens de rotation opposé (sens rétro).

Les plots 28a, 28b, 29, 33a, 33b, 34 et les éléments en saillie 16, 17 sont positionnés et dimensionnés de manière à limiter la compression des organes élastiques 10a, 10b et éviter, lorsqu'il s'agit de ressorts hélicoïdaux, que les spires des ressorts soient jointives lors de leur compression, quel que soit le mode de fonctionnement du convertisseur de couple.

La raideur K1 de chaque organe élastique 10a, monté entre les rondelles de guidage 7a, 7b et l'organe de phasage 30 est inférieure à la raideur K2 de chaque organe élastique 10b monté entre l'organe de phasage 30 et le voile annulaire 24. Le rapport K2/K1 est au moins égal à 2, plus particulièrement compris entre 2 et 5 et de préférence compris entre 2 et 3.

Dans la forme de réalisation représentée aux figures, les organes élastiques 10a, 10b sont des ressorts de compression hélicoïdaux. La longueur et le nombre de spires des ressorts 10a sont plus importants que ceux des ressorts 10b de sorte que la raideur des ressorts 10a est plus faible que celle des ressorts 10b. A titre d'exemple, K1 est de l'ordre de 5N/° et K2 est de l'ordre de 15N/°. Dans une autre application, K1 peut être égal à 20N/° et K2 peut être égal à 60N/°.

Comme indiqué précédemment, ceci permet de relever suffisamment la fréquence propre de l'organe de phasage, afin d'éviter que ce dernier soit excité pour des bas régimes du moteur. La fréquence propre de l'organe de phasage peut, par exemple, n'être atteinte que pour des régimes moteurs supérieurs à 3000 ou 4000 tours par minute.

D'une manière générale, le fait d'avoir une raideur K1 relativement faible permet également au dispositif de transmission de couple d'améliorer le filtrage des vibrations et des acyclismes de rotation.

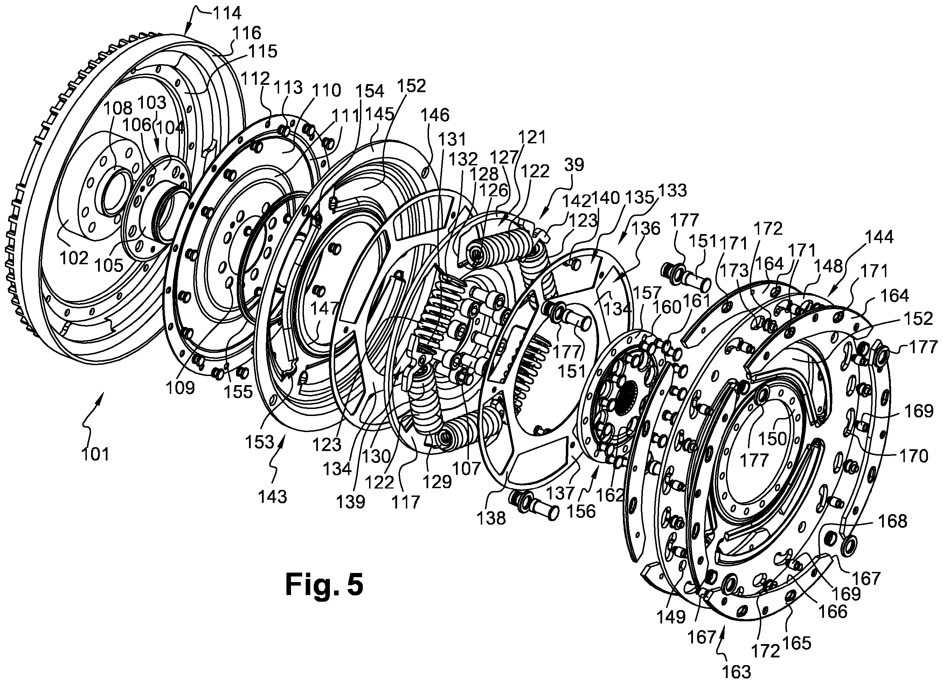

Les figures 5 à 10 illustrent un dispositif de transmission de couple se présentant sous la forme d'un double volant amortisseur (DVA), connu de la demande de brevet FR 12 51107_au nom de la Demanderesse et non encore publiée.

Il comporte un élément d'entrée de couple comprenant un volant moteur 101 destiné à être couplé directement à un arbre moteur, tel par exemple qu'un vilebrequin 102 d'un moteur thermique.

Le volant moteur 101 comporte un moyeu central 103, qu'on appellera dans la suite de la description moyeu primaire 103, comprenant une partie annulaire radiale 104 dont la périphérie radialement interne est prolongée vers l'avant par une partie annulaire cylindrique 105. Des trous 106 sont ménagés dans la partie annulaire radiale et sont régulièrement répartis sur toute la circonférence. Des vis de fixation 107, engagées dans les trous 106, permettent la fixation du moyeu primaire 103 à l'extrémité du vilebrequin 102 du moteur.

L'extrémité du vilebrequin 102 comporte une zone cylindrique de guidage 108, engagée à l'intérieur du moyeu primaire 103, de manière à assurer le centrage du moyeu primaire 103 sur l'extrémité du vilebrequin 102.

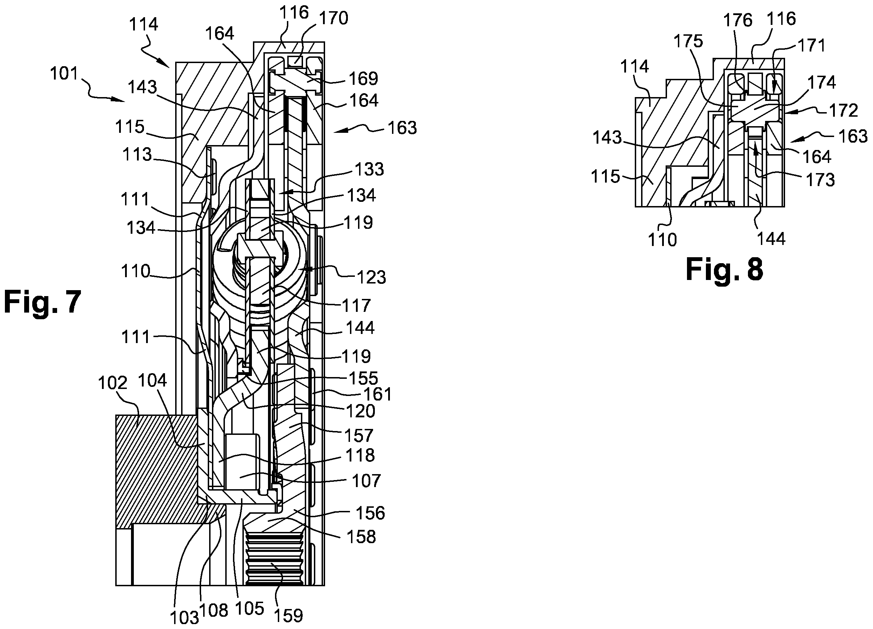

Les vis précitées 107 viennent également s'engager dans des trous 109 ménagés à la périphérie radialement interne d'une tôle annulaire flexible 110, déformable élastiquement et axialement. La tôle annulaire comporte des zones annulaires cambrées 111 (figures 5 et 7), comme cela est connu en soi. La tôle annulaire 110 permet de filtrer une partie des vibrations générées par le moteur et transmis par le vilebrequin 102.

Des trous 112 sont en outre ménagés à la périphérie radialement externe de la tôle flexible et sont destinés à la fixation par l'intermédiaire de rivets 113 à une masse d'inertie annulaire 114.

Plus particulièrement, la masse d'inertie comporte une partie 115 s'étendant radialement, dont le bord périphérique externe est prolongé vers l'avant par un rebord cylindrique 116.

L'ensemble formé par la masse d'inertie 114, la tôle flexible 110 et le moyeu primaire 103 est appelé volant moteur ou volant primaire. Cet ensemble peut, en variante, être formé d'une seule pièce.

Les vis précitées 107 viennent également s'engager dans des trous ménagés à la périphérie radialement interne d'un voile annulaire 117. Les têtes des vis 107 viennent en appui contre la face avant du voile annulaire 117.

Le voile annulaire 117 comporte une partie radialement interne 118, dans laquelle sont ménagés les trous précités, et une partie radialement externe 119, reliées par une partie tronconique 120 s'évasant vers l'avant (figure 7). La partie radialement externe 119 est ainsi décalée axialement vers l'avant par rapport à la partie radialement interne 118.

Le voile annulaire 117 comporte au moins deux fenêtres 121 servant au logement d'au moins deux groupes d'organes élastiques 122,123. Dans la forme de réalisation représentée aux figures 5 à 10, le voile annulaire 117 comporte trois fenêtres 121 (figure 5) s'étendant circonférentiellement dans la partie radialement externe, et servant au logement de trois groupes d'organes élastiques 122, 123, chaque groupe étant constitué de deux organes élastiques 122, 123 agencés en série, comme cela sera mieux décrit dans ce qui suit.

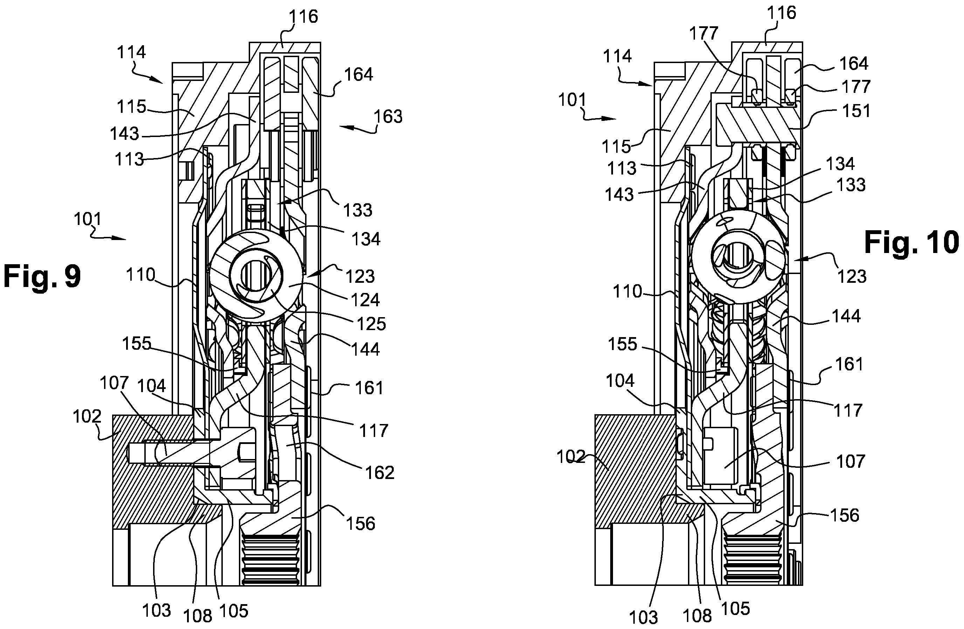

Chaque organe élastique 122, 123 peut comporter deux ressorts coaxiaux 124, 125 (figure 9), montés l'un dans l'autre. Ces ressorts 124, 125 sont des ressorts hélicoïdaux de compression, qui sont droits, c'est-à-dire qui s'étendent de façon sensiblement rectiligne.

Les fenêtres comportent un bord courbe interne 126, un bord courbe externe 127 et des bords d'extrémité 128 globalement radiaux, destinés à l'appui des organes élastiques 122, 123 (figure 5). Ces bords d'extrémités 128 peuvent former un angle avec la direction radiale.

Les extrémités circonférentielles des fenêtres 121 présentent des dimensions radiales rétrécies, afin d'assurer le maintien radial en position des extrémités 129, 132 des organes élastiques 122, 123. Au contraire, les zones centrales des fenêtres 121 présentent une dimension radiale plus importante, afin que les organes élastiques droits 122, 123 ne viennent pas frotter contre le bord radialement externe 127 en fonctionnement.

Le volant moteur et le voile annulaire 107 forment l'élément d'entrée de couple.

Comme indiqué précédemment, les organes élastiques 122, 123 d'un même groupe sont montés en série, par l'intermédiaire d'un organe de phasage 133.

Dans la forme de réalisation représentée aux figures 5 à 10, l'organe de phasage 133 comporte deux tôles radiales 134 s'étendant de part et d'autre de la zone radialement externe 119 du voile annulaire 117.

Chaque tôle 134 comporte au moins deux paires de fenêtres 135, 136, chaque fenêtre 135, 136 étant destinée à loger un organe élastique 122, 123. Sur la figure 5, chaque tôle 134 comporte trois paires de fenêtres. Ainsi, chaque tôle 134 comporte un anneau radialement interne et un anneau radialement externe, reliés par six pattes radiales 137, 138. Trois de ces pattes, référencées 137, servent à la fixation de trois éléments d'appui 139, par l'intermédiaire de rivets 140. Chaque élément d'appui 139 comporte deux faces d'appui 141 sensiblement planes et opposées, formant un angle entre elles et servant à l'appui des extrémités 130, 131 des organes élastiques 122, 123.

Chaque élément d'appui 139 comporte en outre, à son bord radialement externe, deux pattes opposées 142 s'étendant de part et d'autre afin de former des butées limitant le déplacement vers l'extérieur des extrémités 130, 131 des organes élastiques 122, 123 venant s'appuyer sur l'élément d'appui 139.

Ainsi, les extrémités des organes élastiques 122, 123 sont maintenues radialement en position par les extrémités rétrécies des fenêtres 121 du voile annulaire 117 et par les pattes précitées 142 des éléments d'appui 139.

Lors du montage, les organes élastiques 122, 123 sont précontraints à l'intérieur des fenêtres 121 du voile annulaire 117. En d'autres termes, lors du montage, chaque organe élastique 122, 123 comporte une extrémité 129, 132 en appui contre un bord d'extrémité 128 de la fenêtre 121 et une extrémité 130, 131 en appui contre une face d'appui 141 d'un élément d'appui 139.

En fonctionnement, chaque groupe d'organe élastique 122, 123 est destiné à être comprimé entre le voile annulaire 117, d'une part, et des rondelles de guidage 143, 144 de l'élément de sortie de couple, d'autre part.

Ainsi, dans un premier sens de rotation, les extrémités 129 des organes élastiques 122 viennent en appui contre le voile annulaire 117 de l'élément d'entrée de couple et les extrémités 132 des organes élastiques 123 viennent en appui contre les rondelles de guidage 143, 144 de l'élément de sortie de couple. Dans un second sens de rotation, opposé au premier, les extrémités 129 des organes élastiques 122 viennent en appui contre les rondelles de guidage 143, 144 de l'élément de sortie de couple et les extrémités 132 des organes élastiques 123 viennent en appui contre les rondelles de guidage 143, 144 de l'élément de sortie de couple.

Une première rondelle de guidage 143, dite rondelle de guidage arrière 143, comporte une périphérie radialement externe 145 dans laquelle sont ménagés des trous 146 et une périphérie radialement interne 147 décalée axialement vers l'arrière par rapport à la périphérie radialement externe 145 (figure 5).

Une seconde rondelle de guidage 144, dite rondelle de guidage avant 144, comporte une périphérie radialement externe 148 dans laquelle sont ménagés des trous 149 et une périphérie radialement interne 150 décalée axialement vers l'avant par rapport à la périphérie radialement externe 149 (figure 5).

Les trous 146, 149 des rondelles de guidage 143, 144 servent au passage de rivets 151 (figures 5 et 10) permettant notamment de fixer les deux rondelles de guidage 143, 144 entre elles.

Les parties radialement médianes des rondelles de guidage 143, 144 comportent chacune au moins deux fenêtres 152, trois dans le mode de réalisation représenté, s'étendant circonférentiellement, destinées à loger chacune un groupe d'organes élastiques 122, 123. Les fenêtres 152 de la rondelle de guidage avant 144 sont disposées en regard des fenêtres 152 de la rondelle de guidage arrière 143.

Les extrémités circonférentielles des fenêtres 152 comportent des zones d'appui radiales 153 et 154 (figure 5), destinées respectivement à l'appui des extrémités 129 et 132 des organes élastiques 122, 123, en fonction du sens de rotation de l'élément de sortie de couple par rapport à l'élément d'entrée de couple.

Les organes élastiques 122, 123 sont ainsi agencés entre l'élément d'entrée de couple et l'élément de sortie de couple, de manière à amortir et absorber les vibrations et les acyclismes de rotation.

Une bague 155 de friction, de section en forme générale de L, est montée axialement entre la périphérie radialement interne 147 de la rondelle de guidage arrière 143 et le voile annulaire 117.

Un moyeu 156, appelé ci-après moyeu secondaire 156, est fixé en périphérie radialement interne 150 de la seconde rondelle de guidage 144. Le moyeu secondaire 156 comporte une partie radiale annulaire 157 dont le bord radialement interne est prolongé vers l'arrière par une partie annulaire cylindrique 158 présentant intérieurement des cannelures 159 (figure 7) destinées à coopérer avec des cannelures d'un arbre de sortie, lui-même destiné à être couplé à un élément d'entrée d'un embrayage ou d'un convertisseur de couple par exemple.

La partie radiale annulaire 157 comporte, en périphérie radialement externe, des trous 160 servant à sa fixation, par l'intermédiaire de rivets 161, sur la rondelle de guidage avant 144. La partie radiale annulaire 157 comporte en outre, dans une zone médiane, des trous 162 servant au passage des vis de serrage, d'un outil de serrage ou de desserrage des vis 107 de fixation de l'élément d'entrée de couple sur le vilebrequin 102.

Les rondelles de guidage 143, 144 et le moyeu secondaire 156 forment l'élément de sortie de couple.

Des moyens d'amortissement pendulaires 163 sont montés sur l'élément de sortie de couple, plus précisément sur la rondelle de guidage avant 144.

Les moyens d'amortissement pendulaires 163 comportent au moins deux paires de masses ou masselottes 164, quatre dans le mode de réalisation représenté, en forme générale d'arc de cercle, montées en périphérie radialement externe 148 de la rondelle de guidage avant 144.

Les masses 164 d'une même paire sont montées de part et d'autre de la rondelle de guidage avant 144, en regard les unes des autres.

Chaque masse 164 comporte un bord périphérique externe 165 s'étendant en regard de la périphérie radialement externe de la rondelle de guidage avant 144, un bord périphérique interne 166 et des extrémités circonférentielles radiales 167 (figure 5). Les extrémités circonférentielles 167 sont reliées au bord périphérique interne 166 par des zones planes 168 formant un angle, par exemple de l'ordre de 45°, avec les extrémités circonférentielles radiales 167.

Les masses 164 d'une même paire sont fixées l'une à l'autre par trois rivets 169 assurant également une fonction d'entretoisement. L'écartement entre les masses 164, maintenues par les rivets 169, est supérieur à l'épaisseur de la rondelle de guidage avant 144, dans sa partie radialement externe 148, de manière à limiter les frottements entre les masses 164 et la rondelle de guidage avant 144.

Un rivet 169 est disposé à proximité de chacune des extrémités circonférentielles des masses 164, un autre rivet 169 étant situé en partie médiane desdites masses 164.

Chacun des rivets 169 traverse un trou oblong 170, en forme générale d'arc de cercle, de la rondelle de guidage avant 144 (figures 5, 6 et 7). Ces trous en arc de cercle 170 présentent une concavité tournée radialement vers l'intérieur. Les dimensions des trous 170 sont telles que, en fonctionnement, les rivets 169 ne viennent pas au contact des bords desdits trous oblongs 170, pour les raisons exposées ci-après.

Chaque masse 164 comporte en outre deux trous oblongs 171, en forme général d'arc de cercle, dont la concavité est tournée radialement vers l'extérieur, et disposés chacun circonférentiellement entre deux rivets 169. Les trous 171 d'une masse 164 sont disposés en regard des trous 171 de la masse opposée 164. Ces trous 171 servent au montage avec jeu de guides ou rouleaux 172, s'étendant axialement d'une masse à l'autre, au travers de trous oblongs 173 en forme d'arc de cercle et dont la concavité est tournée radialement vers l'intérieur, ménagés dans la rondelle de guidage avant 144.

Chaque rouleau 172 comporte une zone centrale cylindrique 174 (figure 8), des zones d'extrémités 175 cylindriques de plus faible diamètre que la zone centrale 174, et deux collerettes 176 s'étendant radialement vers l'extérieur, délimitant la zone centrale 174 de chacune des zones d'extrémités 175.

Le diamètre des collerettes 176 est inférieur à la dimension radiale des trous oblongs 173 de la rondelle de guidage avant 144, de façon à permettre le montage des rouleaux 172 dans les trous 173.

La zone centrale 174 est destinée à rouler sur le bord périphérique du trou 173 en arc de cercle correspondant de la rondelle de guidage avant 144, et les zones d'extrémités 175 sont destinées à rouler sur les bord des trous 171 en arc de cercle correspondants des masses 164. Les collerettes 176 sont destinées à s'intercaler entre les masses 164 et la rondelle de guidage avant 144, de manière à limiter les frottements lors du déplacement des masses 164 par rapport à la rondelle de guidage avant 144.

On notera qu'en fonctionnement, les rouleaux 172 et les masses 164 sont poussés vers l'extérieur sous l'effet de la force centrifuge.

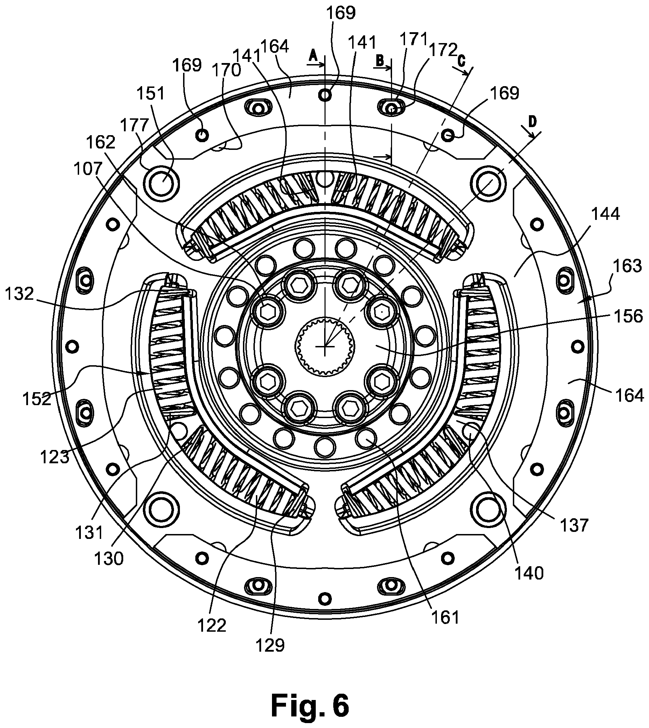

La rondelle de guidage avant 144 est en outre équipée, de part et d'autre, d'organes de butée disposés chacun circonférentiellement entre deux masses adjacentes. Les organes de butée comportent des bagues en élastomère 177, reliées deux à deux par les rivets 151 de fixation des rondelles de guidage 143, 144 (figures 6 et 10). En fonctionnement, le déplacement des masses 164 est limité par les organes de butée, par appui des zones 168 sur les anneaux en élastomère 177. Les dimensions et le positionnement des différents éléments sont tels que les masses 164 viennent en appui sur les organes de butée 177 avant que les rouleaux 172 ou les rivets 169 ne viennent en butée contre les extrémités circonférentielles des trous 171, 170, 173 en arc de cercle des masses 164 et de la rondelle de guidage avant 144. Ceci permet de limiter le bruit en fonctionnement.

Les masses 164 sont ainsi montées de façon mobile sur la rondelle de guidage avant 144, à la manière de pendules, la trajectoire des masses 164 étant définie par la forme des trous en arc de cercle 173, 171 ménagés dans la rondelle de guidage avant 144 et dans les masses 164.

Comme cela est connu en soi, les moyens d'amortissement pendulaires 163 permettent de limiter les vibrations transmises à l'arbre de sortie.

On notera que la masse d'inertie 114, et plus particulièrement son rebord 116, recouvrent le voile annulaire 117, les organes élastiques 122, 123, les rondelles de guidage 143, 144, le moyeu secondaire 156 et les moyens d'amortissement pendulaires 163.

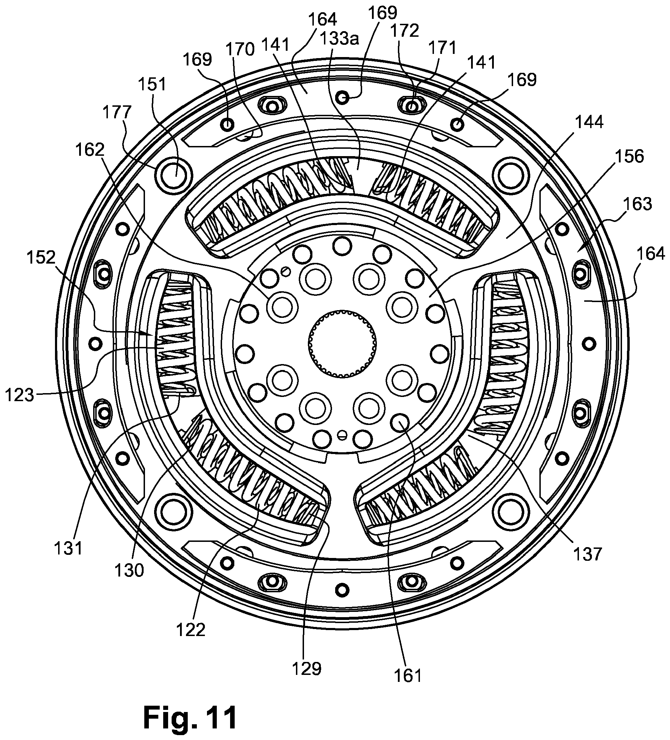

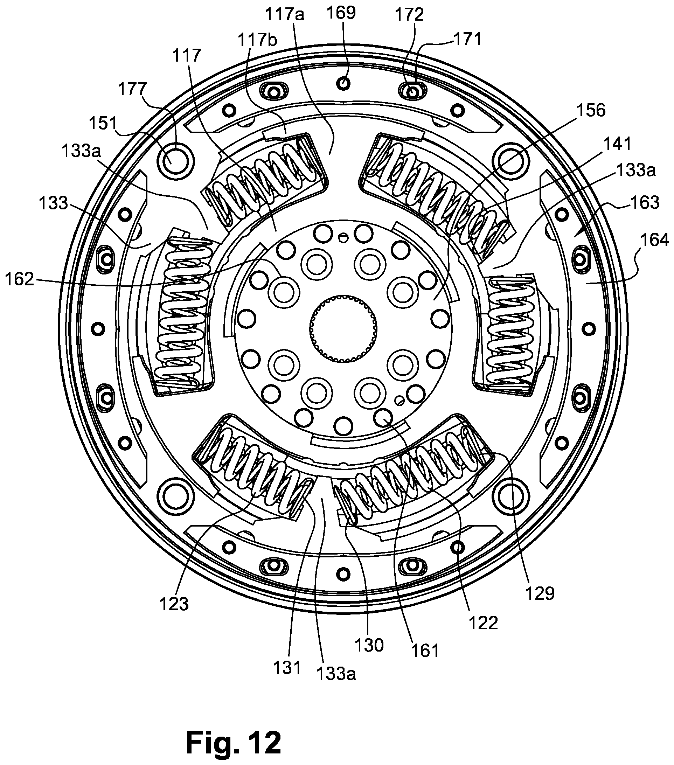

Les figures 11 et 12, illustrent un double volant amortisseur selon une première forme de réalisation, qui diffère du double volant amortisseur des figures 5 à 10 par les caractéristiques exposées ci-après.

Le voile annulaire 117 comporte une partie radialement interne à partir de laquelle s'étendent des pattes 117a servant à l'appui des organes élastiques 122, 123, des rebords 117b s'étendant circonférentiellement de part et d'autre de la périphérie radialement externe de chacune des pattes 117a. Malgré cette légère différence de structure avec l'art antérieur, le rôle et le fonctionnement du voile annulaire 117 restent inchangés.

Par ailleurs, l'organe de phasage 133 est réalisé de façon monobloc et comporte une partie annulaire externe à partir de laquelle des pattes 133a s'étendent radialement vers l'extérieur de manière à former les surfaces d'appui 141 des organes élastiques 122, 123. Comme précédemment, malgré cette légère différence de structure avec l'art antérieur, le rôle et le fonctionnement de l'organe de phasage 133 restent inchangés.

La principale différence avec l'art antérieur réside dans le fait que la raideur K1 de chaque organe élastique 122 est inférieure à la raideur K2 de chaque organe élastique 123. Le rapport K2/K1 est au moins égal à 2, plus particulièrement compris entre 2 et 5 et de préférence compris entre 2 et 3.

Dans la forme de réalisation des figures 11 et 12, chaque organe élastique 122, 123 comporte deux ressorts coaxiaux, montés l'un dans l'autre. Plus particulièrement, ces ressorts coaxiaux sont des ressorts hélicoïdaux de compression, qui sont droits, c'est-à-dire qui s'étendent de façon sensiblement rectiligne.

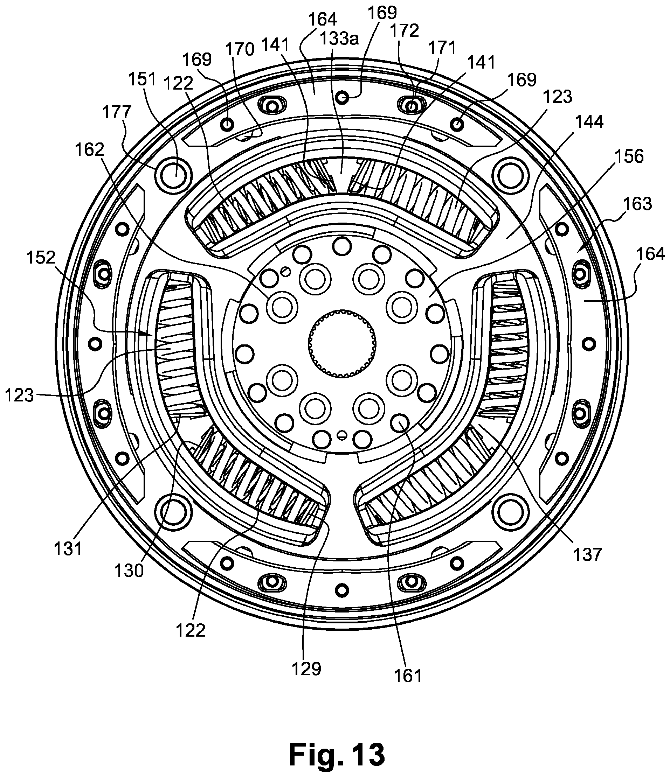

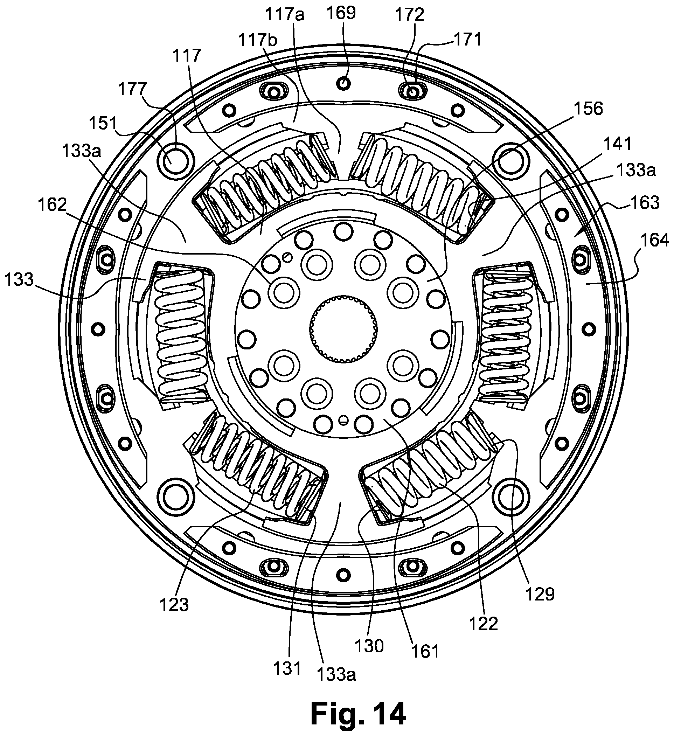

Les figures 13 et 14 illustrent une forme de réalisation de l'invention, qui diffère de celle exposée aux figures 11 et 12 en ce que l'organe élastique 122, de plus faible raideur, comporte deux ressorts hélicoïdaux droits et coaxiaux. L'organe élastique 123 est, quant à lui, formé d'un seul ressort droit dont la raideur K2 est supérieure à la raideur K1 de l'organe élastique 122.

Dans une autre forme de réalisation non représentée, le dispositif de transmission de couple est dépourvu de moyens d'amortissement pendulaire.

## Revendications

1. Dispositif de transmission de couple pour un véhicule automobile, comportant un élément d'entrée de couple (7), un élément de sortie de couple (24), et au moins deux organes élastiques (10a, 10b) montés entre les éléments d'entrée et de sortie de couple (7, 24) et agissant à l'encontre de la rotation de l'un desdits éléments d'entrée et de sortie de couple par rapport à l'autre, les organes élastiques (10a, 10b) étant agencés en série par l'intermédiaire d'un organe de phasage (30) de façon à ce que les organes élastiques (10a, 10b) se déforment en phase les uns avec les autres, **caractérisé en ce que** la raideur K1 de l'organe élastique (10a) monté entre l'élément d'entrée de couple (7) et l'organe de phasage (30) est inférieure à la raideur K2 de l'organe élastique (10b) monté entre l'organe de phasage (30) et l'élément de sortie de couple (24), le rapport K2/K1 étant au moins égal à 2.

2. Dispositif de transmission de couple selon la revendication 1, **caractérisé en ce que** le rapport K2/K1 est compris entre 2 et 5, préférentiellement compris entre 2 et 3.

3. Dispositif de transmission de couple selon la revendication 1 ou 2, **caractérisé en ce qu'**il comporte des moyens d'amortissement pendulaires (163) comprenant au moins une masse pendulaire (164) montée de façon mobile sur l'organe de phasage, sur l'élément d'entrée de couple ou sur l'élément de sortie de couple.

4. Dispositif de transmission de couple selon l'une des revendications 1 à 3, **caractérisé en ce que** les organes élastiques (10a, 10b) sont des ressorts de compression hélicoïdaux, l'élément d'entrée de couple (7), l'élément de sortie de couple (24) et/ou l'organe de phasage (30) comportant des moyens de butée (16, 17, 28, 29, 33, 34) conçus pour limiter la compression des ressorts (10a, 10b) et éviter que les spires des ressorts soient jointives lors leur compression.

5. Dispositif de transmission de couple selon l'une des revendications 1 à 4, **caractérisé en ce qu'**il se présente sous la forme d'un convertisseur de couple.

6. Dispositif de transmission de couple selon l'une des revendications 1 à 4, **caractérisé en ce qu'**il se présente sous la forme d'un double volant amortisseur (101).

## Patentansprüche

1. Drehmomentübertragungsvorrichtung für ein Kraftfahrzeug, welche ein Drehmomenteingangselement (7), ein Drehmomentausgangselement (24) und wenigstens zwei elastische Organe (10a, 10b), die zwischen dem Drehmomenteingangs- und dem Drehmomentausgangselement (7, 24) angebracht sind und der Drehung des einen von dem Drehmomenteingangs- und dem Drehmomentausgangselement bezüglich des anderen entgegenwirken, aufweist, wobei die elastischen Organe (10a, 10b) über ein Phaseneinstellungsorgan (30) in Reihe angeordnet sind, derart, dass sich die elastischen Organe (10a, 10b) in Phase miteinander verformen, **dadurch gekennzeichnet, dass** die Steifigkeit K1 des elastischen Organs (10a), das zwischen dem Drehmomenteingangselement (7) und dem Phaseneinstellungsorgan (30) angebracht ist, kleiner als die Steifigkeit K2 des elastischen Organs (10b) ist, das zwischen dem Phaseneinstellungsorgan (30) und dem Drehmomentausgangselement (24) angebracht ist, wobei das Verhältnis K2/K1 wenigstens gleich 2 ist.

2. Drehmomentübertragungsvorrichtung nach Anspruch 1, **dadurch gekennzeichnet, dass** das Verhältnis K2/K1 zwischen 2 und 5 liegt, vorzugsweise zwischen 2 und 3 liegt.

3. Drehmomentübertragungsvorrichtung nach Anspruch 1 oder 2, **dadurch gekennzeichnet, dass** sie Pendeldämpfungsmittel (163) aufweist, die wenigstens eine Pendelmasse (164) umfassen, welche beweglich an dem Phaseneinstellungsorgan, an dem Drehmomenteingangselement oder an dem Drehmomentausgangselement angebracht ist.

4. Drehmomentübertragungsvorrichtung nach einem der Ansprüche 1 bis 3, **dadurch gekennzeichnet, dass** die elastischen Organe (10a, 10b) Schraubendruckfedern sind, wobei das Drehmomenteingangselement (7), das Drehmomentausgangselement (24) und/oder das Phaseneinstellungsorgan (30) Anschlagmittel (16, 17, 28, 29, 33, 34) aufweisen, die dafür ausgelegt sind, die Kompression der Federn (10a, 10b) zu begrenzen und zu vermeiden, dass die Windungen der Federn bei ihrer Kompression aneinander anliegen.

5. Drehmomentübertragungsvorrichtung nach einem der Ansprüche 1 bis 4, **dadurch gekennzeichnet, dass** sie in Form eines Drehmomentwandlers vorliegt.

6. Drehmomentübertragungsvorrichtung nach einem der Ansprüche 1 bis 4, **dadurch gekennzeichnet, dass** sie in Form eines Zweimassen-Dämpfungsschwungrades (101) vorliegt.

## Claims

1. Torque transmission device for a motor vehicle, comprising a torque input element (7), a torque output element (24), and at least two elastic members (10a, 10b) mounted between the torque input and output elements (7, 24) and acting against the rotation of one of said torque input and output elements in relation to one another, the elastic members (10a, 10b) being arranged in series via a phasing member (30) such that the elastic members (10a, 10b) are deformed in phase with one another, **characterized in that** the stiffness K1 of the elastic member (10a) mounted between the torque input element (7) and the phasing member (30) is less than the stiffness K2 of the elastic member (10b) mounted between the phasing member (30) and the torque output element (24), the ratio K2/K1 being at least equal to 2.

2. Torque transmission device according to Claim 1, **characterized in that** the ratio K2/K1 lies between 2 and 5, preferentially between 2 and 3.

3. Torque transmission device according to Claim 1 or 2, **characterized in that** it comprises pendular damping means (163) comprising at least one pendular weight (164) mounted to move on the phasing member, on the torque input element or on the torque output element.

4. Torque transmission device according to one of Claims 1 to 3, **characterized in that** the elastic members (10a, 10b) are helical compression springs, the torque input element (7), the torque output element (24) and/or the phasing member (30) comprising abutment means (16, 17, 28, 29, 33, 34) designed to limit the compression of the springs (10a, 10b) and to prevent the turns of the springs from being contiguous upon their compression.

5. Torque transmission device according to one of Claims 1 to 4, **characterized in that** it takes the form of a torque converter.

6. Torque transmission device according to one of Claims 1 to 4, **characterized in that** it takes the form of a dual-mass flywheel (101).
